# EUROPÄISCHE PATENTSCHRIFT

(11) **EP 1 842 724 B1**
(45) Veröffentlichungstag und Bekanntmachung des Hinweises auf die Patenterteilung: **30.12.2009**
(21) Anmeldenummer: 07006939.8
(22) Anmeldetag: 03.04.2007
(51) Int. Cl.: B60Q 1/076

(54) **Scheinwerferverstellvorrichtung mit gruppenweise verstellbaren Leuchteinheiten**
Headlamp adjustment device with illumination units adjustable in groups
Dispositif de réglage de phares doté d'unités d'éclairage réglables en groupes

(30) Priorität: 05.04.2006 DE 102006016378
(43) Veröffentlichungstag der Anmeldung: 10.10.2007
(73) Patentinhaber: odelo GmbH, 71409 Schwaikheim (DE)
(72) Erfinder: Mertens, Jens, 73734 Esslingen (DE); Müller, Otto, 73344 Gruibingen (DE); Tebbe, Frank, 88521 Ertingen (DE)
(74) Vertreter: Kaufmann, Ursula Josefine

(56) Entgegenhaltungen:
- DE-A1-102004 020 493
- US-A1- 2004 240 217
- US-A1- 2006 023 461

## Beschreibung

Die Erfindung betrifft eine Scheinwerferverstellvorrichtung mit gruppenweise verstellbaren Leuchteinheiten.

In Kraftfahrzeugscheinwerfern, z.B. in Scheinwerfer mit Lumineszenzdioden als Lichtquellen, wird das Abblendlicht, das Fernlicht, das Tagfahrlicht, etc. meist mittels mehrerer Leuchteinheiten erzeugt. Eine Leuchteinheit umfasst hierbei ein Licht- oder ein Reflektormodul oder eine Gruppe von Licht- und/oder Reflektormodulen. Diese Leuchteinheiten sollen verstellbar sein, um die Ausleuchtung der Fahrbahn an den Fahrzustand anzupassen. Fährt das Fahrzeug z.B. in eine Kurve, sollen die Leuchteinheiten in die Kurvenrichtung geschwenkt werden können. Wird das Fahrzeug beispielsweise be- oder entladen, soll die Leuchtweite der Scheinwerfer dem Beladungszustand angepasst werden können.

Aus der DE 10 2004 020 493 A1 ist eine Lichtverteilungsbaugruppe bekannt, die eine Vielzahl von Modulen mit jeweils mindestens einer darauf angeordneten Leuchteinheit umfasst. Die Module sind an einem Basisbauteil oder einer Basisbaugruppe mit mindestens einem Freiheitsgrad um mindestens eine Achse gelenkig oder starr gelagert. Die Module können mittels eines ersten Stellantriebs gruppenweise oder einzeln geschwenkt werden. Das Basisbauteil bzw. die Basisgruppe kann selbst an einem Gehäuse schwenkbar gelagert sein und mittels eines zweiten Stellantriebs um eine weitere, zweite Achse geschwenkt werden. Als mögliche Anwendung sind beispielsweise Kurvenlicht in Kombination mit Fern- und Abblendlicht angegeben.

Eine Verstellung der Leuchteinheiten in zwei Richtungen wird dadurch erreicht, dass die Leuchteinheiten mitsamt den ersten Stellantrieben auf dem durch den zweiten Stellantrieb geschwenkten Basisbauteil angeordnet sind, wodurch dich die Positionen der Schwenklagerungen der ersten Achse bei einem Verschwenken um die zweite Achse verlagern.

Der vorliegenden Erfindung liegt daher die Problemstellung zugrunde, eine platzsparende Scheinwerferverstellvorrichtung zum Verstellen der Leuchteinheiten in zwei Verstellrichtungen zu entwickeln.

Diese Problemstellung wird mit den Merkmalen des Hauptanspruches gelöst. Dazu ist jede Leuchteinheit einzeln direkt oder indirekt mittels jeweils eines Gelenks im Scheinwerfergehäuse gelagert und sie ist in einer ersten Vorschubvorrichtung schwenkbar gelagert. Die Scheinwerferverstellvorrichtung umfasst eine zweite Vorschubvorrichtung. Die zweite Vorschubvorrichtung führt die erste Vorschubvorrichtung. Die Orientierung des Hubs der ersten Vorschubvorrichtung und die Orientierung des Hubs der zweiten Vorschubvorrichtung schließen einen Winkel ein, der ungleich einem ganzzahligem Vielfachen von Pi ist.

Weitere Einzelheiten der Erfindung ergeben sich aus den Unteransprüchen und der nachfolgenden Beschreibung schematisch dargestellter Ausführungsformen.
- Figur 1:: Horizontaler Schnitt durch eine Scheinwerferverstellvorrichtung;
- Figur 2:: Figur 1 in geschwenkter Position;
- Figur 3:: Querschnitt der Scheinwerferverstellvorrichtung aus Figur 1;
- Figur 4:: Längsschnitt von Figur 1
- Figur 5:: Figur 4 bei verstellter Leuchtweite;
- Figur 6:: Verstellvorrichtung mit in Fahrtrichtung zueinander versetzten Leuchteinheiten;
- Figur 7:: Figur 6 in geschwenkter Position;
- Figur 8:: Querschnitt der Scheinwerferverstellvorrichtung aus Figur 6;
- Figur 9:: Längsschnitt von Figur 6;
- Figur 10:: Figur 9 bei verstellter Leuchtweite.

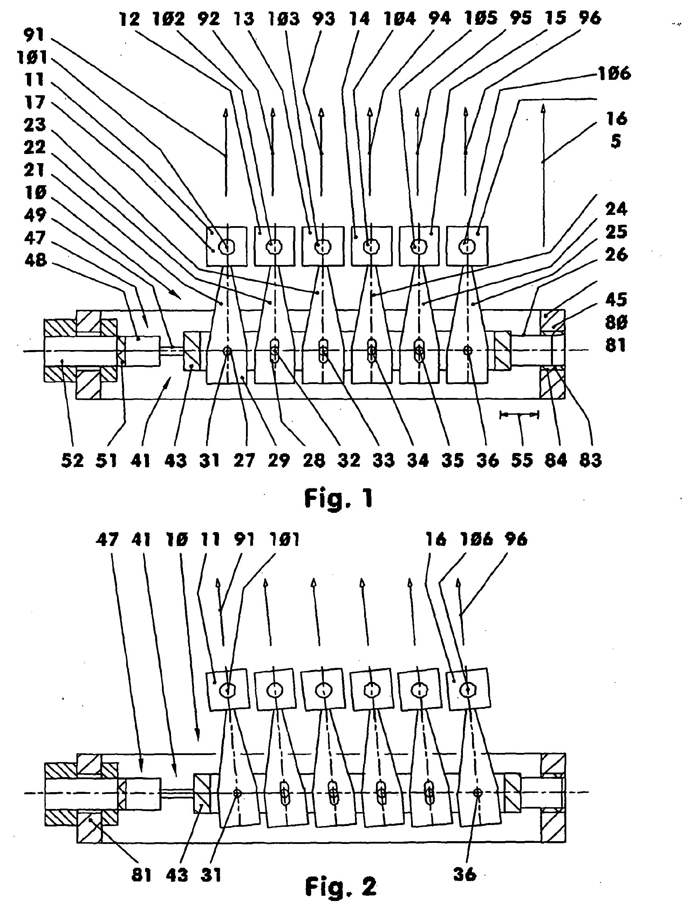

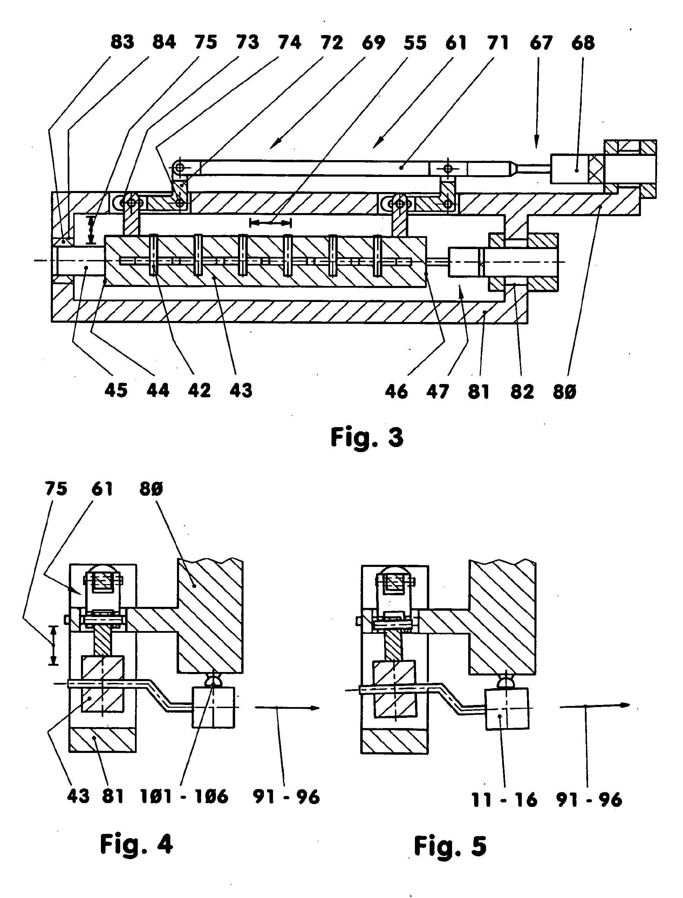

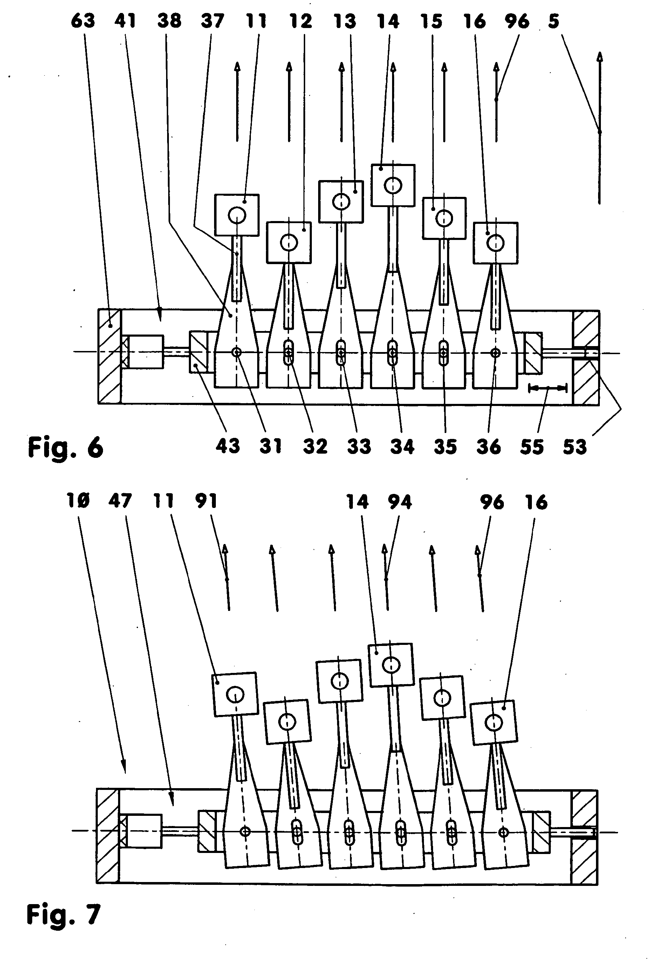

Die Figuren 1 - 5 zeigen eine Scheinwerferverstellvorrichtung (10) z.B. eines linken Frontscheinwerfers eines Kraftfahrzeugs. Die Figuren 1 und 2 zeigen eine Schnittdarstellung der Scheinwerferverstellvorrichtung (10), wobei die Schnittebene beispielsweise eine horizontale Ebene ist. In der Figur 1 ist die Scheinwerferverstellvorrichtung (10) in einer Mittelposition dargestellt, beispielsweise bei der Geradeausfahrt des Fahrzeuges. Die Figur 2 zeigt die Scheinwerferverstellvorrichtung (10) z.B. mit nach links geschwenkten Leuchteinheiten (11 - 16). In der Figur 3 ist ein Querschnitt der Scheinwerferverstellvorrichtung (10) mit einer Schnittebene normal zur Fahrtrichtung (5) des Fahrzeuges dargestellt. Die Figuren 5 und 6 zeigen Längsschnitte der Scheinwerferverstellvorrichtung (10). Hierbei sind in der Figur 5 die Leuchteinheiten (11 - 16) in einer Mittelstellung dargestellt, beispielsweise bei einer mittleren Beladung des Fahrzeugs. In der Figur 6 sind die Leuchteinheiten (11 - 16) mit erhöhter Leuchtweite, z.B. bei einem frontlastig beladenen Kraftfahrzeug dargestellt. Die Leuchteinheiten (11 - 16) sind hierzu z.B. im Uhrzeigersinn geschwenkt gezeigt.

Der in den Figuren 1 bis 5 nicht näher dargestellte Scheinwerfer umfasst ein Scheinwerfergehäuse (80), in dem die Scheinwerferverstellverstellvorrichtung (10) mit beispielsweise sechs nebeneinander angeordneten Leuchteinheiten (11 - 16) und mit zwei Vorschubvorrichtungen (41, 61) angeordnet ist. Die Leuchteinheiten (11 - 16) sind in der Fahrtrichtung (5) des Kraftfahrzeugs nach vorne gerichtet. Die Scheinwerferverstellvorrichtung (10) oder einzelne ihrer Komponenten können direkt im Scheinwerfergehäuse (80) angeordnet sein oder indirekt z.B. mittels Adapterbauteilen mit diesem verbunden sein.

Jede Leuchteinheit (11 - 16) umfasst hier beispielsweise ein Lichtmodul (17) und einen am Lichtmodul (17) befestigten Schwenkhebel (21 - 26). Das Lichtmodul (17) hat z.B. einen Rahmen, in dem eine oder mehrere Lichtquellen, optische Linsen, Kühlelemente, etc. zueinander positioniert sind. Anstatt eines Lichtmoduls (17) kann die einzelne Leuchteinheit (11 - 16) auch ein Reflektormodul umfassen, in dem das von der Lichtquelle ausgesandte Licht z.B. an einem Reflektor umgelenkt wird. In einer Leuchteinheit (11 - 16) können mehrere Lichtmodule (17) und/oder Reflektormodule beispielsweise als Einheit fest zueinander angeordnet sein.

Die einzelne Leuchteinheit (11 - 16) ist in diesem Ausführungsbeispiel hängend mittels eines Gelenks (101 - 106) im Scheinwerfergehäuse (80) gelagert. Das Gelenk (101 - 106) ist z.B. ein Kugelgelenk (101 - 106) mit drei Schwenkfreiheitsgraden. Anstatt eines Kugelgelenks (101 - 106) kann auch ein Gelenk oder eine Gelenkkombination mit zwei Schwenkfreiheitsgraden eingesetzt werden. Ein derartiges Gelenk erlaubt dann z.B. ein Schwenken mit einer vertikalen, z.B. normal zur Fahrbahn ausgerichteten Schwenkachse und mit einer horizontalen Schwenkachse, wobei letztere z.B. quer zur Fahrtrichtung (5) liegt. Die einzelne Leuchteinheit (11 - 16) kann auch auf einem Gelenk (101 - 106) stehend direkt oder indirekt im Scheinwerfergehäuse (80) gelagert sein.

Die Schwenkhebel (21 - 26) sind beispielsweise an den Rückseiten der Leuchteinheiten (11 - 16) befestigt. Sie ragen in der Darstellung der Figur 1 z.B. radial zu den Gelenken (101 - 106) aus den Leuchteinheiten (11 - 16) heraus. In der ersten Vorschubvorrichtung (41) sind sie z.B. in Schwenkzapfen (42) schwenkbar gelagert. Die Schwenkzapfen (42) und die Schwenkhebel (21 - 26) bilden Gelenke (31 - 36) mit z.B. einem Schwenkfreiheitsgrad. Dieser Schwenkfreiheitsgrad liegt beispielsweise in einer horizontalen Ebene, z.B. parallel zur Fahrbahn. Zur Aufnahme der Schwenkzapfen (42) haben beispielsweise die beiden außenliegenden Schwenkhebel (21, 26) zylindrische Durchbrüche (27), die inneren Schwenkhebel (22 - 25) haben Langlöcher (28), die in Längsrichtung der Schwenkhebel (22 - 25) orientiert sind. Auch die außenliegenden Schwenkhebel (21, 26) können Langlöcher (28) aufweisen. Alle Schwenkhebel (21 - 26) sind z.B. abgekröpft, so dass die in der Vorschubvorrichtung (41) geführten Enden (29) der Schwenkhebel (21 - 26) und die Kugelgelenke (101 - 106) eine gemeinsame, z.B. horizontale Ebene aufspannen. Der einzelne Schwenkhebel (21 - 26) hat beispielweise einen rechteckigen Querschnitt, dessen Breite zur Vorschubvorrichtung (41) hin zunimmt.

In der ersten Vorschubvorrichtung (41) sind die Schwenkhebel (21 - 26) in einem Rahmen (43) mit z.B. rechteckigem, flachen Querschnitt gelagert. Durch den breiten Querschnitt der Enden (29) der Schwenkhebel (21 - 26) wird in diesem Ausführungsbeispiel ein Verkippen der Leuchteinheiten (11 - 16) verhindert. Der Rahmen (43) steht in der Darstellung der Figur 1 quer zu den Schwenkhebeln (21 - 26).

Der Rahmen (43) trägt in diesem Ausführungsbeispiel an seiner einen Stirnseite (44) einen Führungszapfen (45), an der anderen Stirnseite (46) wirkt eine Antriebseinheit (47) auf den Rahmen (43). Sowohl der Führungszapfen (45) als auch die Antriebseinheit (47), beides sind Teile der Vorschubvorrichtung (41), sind in der Darstellung der Figur 1 normal zu den Schwenkhebeln (21 - 26) ausgerichtet.

Die Antriebseinheit (47) umfasst hier einen Antriebsmotor (48) und ein Übertragungselement (49). Der Antriebsmotor (48) ist beispielsweise ein Linear-Schrittmotor, ein Spindelmotor, ein rotatorischer Motor, etc. Das Übertragungselement (49) kann ein Druck- oder Zugstab, eine Spindel, ein Koppelgetriebe, ein Rädergetriebe, etc. sein. Das Übertragungselement (49) ist beispielsweise fest, mittels eines elastisch verformbaren Elements oder mittels eines Gelenks mit dem Rahmen (43) verbunden.

Beim Betrieb der Antriebseinheit (47) wird der Rahmen (43) maximal um den Hub (55) der Vorschubvorrichtung (41) verschoben. Der Hub (55) ist somit der Verfahrweg der Vorschubvorrichtung (41) z.B. zwischen zwei Endanschlägen. Er ist hier in horizontaler Richtung, quer zur Fahrtrichtung (5), orientiert.

Die erste Vorschubvorrichtung (41) ist mittels des Führungszapfens (45) und der Antriebseinheit (47) in einem Aufnahmerahmen (81) gelagert. Hierbei ist der Antriebsmotor (48) beispielsweise mittels eines elastisch verformbaren Zwischenelements (51) mit einem im Rahmendurchbruch (82) sitzenden Lagerungsbolzen (52) verbunden. Der Führungszapfen (45) ist beispielsweise in einer elastisch verformbaren Hülse (83) im Aufnahmerahmen (81) in einem Durchbruch (84) gelagert. Der Aufnahmerahmen (81) ist in diesem Ausführungsbeispiel Teil des Scheinwerfergehäuses (80).

Auf dem Aufnahmerahmen (81) sitzt hier die Antriebseinheit (67) der zweiten Vorschubvorrichtung (61). Diese umfasst einen Antriebsmotor (68), der mittels eines Getriebes (69) mit dem inneren Rahmen (43) verbunden ist. Der Antriebsmotor (68) ist beispielsweise ähnlich aufgebaut wie der Antriebsmotor (48) der ersten Vorschubvorrichtung (41). Die Befestigung des Antriebsmotor (68) am Aufnahmerahmen (81) ist beispielsweise genauso aufgebaut wie die Befestigung des Antriebsmotors (48) am Aufnahmerahmen (81).

Das Getriebe (69) ist z.B. ein Koppelgetriebe (69), dessen Schwinge der innere Rahmen (43) ist. Der Antriebsmotor (68) wirkt auf eine waagerecht liegende Stange (71), die mit zwei Koppelgliedern (72) gelenkig verbunden ist. Die Koppelglieder (72) haben z.B. waagerecht liegende Langlöcher (73), in denen der Rahmen (43) z.B. hängend gelagert ist. Außerdem sind die Koppelglieder (72) im Aufnahmerahmen (81) mittels jeweils eines Gelenks (74) gelagert. Die Bewegungsrichtung des Rahmens (43) ist somit zumindest annähernd normal zur Längsrichtung der Schwenkhebel (21 - 26). Die Koppelglieder (72) können elastisch z.B. in der Richtung ihres geringsten Widerstandsmoments verformbar sein.

Beim Betrieb der Antriebseinheit (67) wird der Rahmen (43) maximal um den Hub (75) der zweiten Vorschubvorrichtung (61) versetzt. Der Hub (75) ist somit der mittels der zweiten Vorschubvorrichtung (61) bewirkte Verfahrweg des Rahmens (43), z.B. zwischen zwei Endanschlägen. Er ist hier in vertikaler Richtung orientiert.

In der in der Figur 1 dargestellten Mittelstellung stehen z.B. alle Leuchteinheiten (11 - 16) parallel zueinander. Ihre Lichtausbreitungsrichtungen (91 - 96) sind beispielsweise parallel zueinander. Der Hub (55) der Vorschubvorrichtung (41) liegt für jede Leuchteinheit (11 - 16) beispielsweise auf einer Tangente an einen Kreis um das jeweilige Gelenk (101 - 106).

Fährt das Kraftfahrzeug z.B. in eine Linkskurve, werden zur Kurvenausleuchtung die Leuchteinheiten (11 - 16) in der Kurvenrichtung, also nach links entgegen dem Uhrzeigersinn, geschwenkt, vgl. Figur 2. Der Schwenkwinkel der Leuchteinheiten (11 - 16) ist in der Figur 2 zur Veranschaulichung überhöht dargestellt. Er ist in einem Kraftfahrzeug beispielsweise kleiner oder gleich 2 Grad.

Zum Verstellen der Leuchteinheiten (11 - 16) z.B. bei einer Linkskurvenfahrt wird die erste Vorschubvorrichtung (41) betätigt. Der Antriebsmotor (48) fährt die Spindel (49) aus und verschiebt den inneren Rahmen (43) in einer Hubrichtung, z.B. in Richtung der rechten Fahrzeugseite, vgl. Figur 2. Der Rahmen (43) wird hierbei beispielsweise mittels des Führungszapfens (45) in der Durchgangsbohrung (84) unter Verformung der Hülse (83) geführt. Die Schwenkzapfen (42) führen die Schwenkhebel (21 - 26), die wiederum die Leuchteinheiten (11 - 16) um die Gelenke (101 - 106) schwenken. In der in der Figur 2 dargestellten geschwenkten Stellung der Leuchteinheiten (11 - 16) stehen die Leuchteinheiten (11 - 16) parallel zueinander. Auch die Lichtausbreitungsrichtungen (91 - 96) sind beispielsweise parallel zueinander.

Fährt das Kraftfahrzeug wieder geradeaus, wird die Spindel (49) wieder eingefahren. Der Rahmen (43) wandert wieder in die Mittelstellung. In einer Rechtskurve wird die Spindel (49) z.B. aus der Mittelstellung heraus eingefahren und zieht den Rahmen (43) in Richtung der linken Fahrzeugseite.

In der Figur 4 ist eine Seitenansicht der Scheinwerferverstellvorrichtung (10) aus Figur 1 dargestellt. Die Leuchteinheiten (11 - 16) stehen in einer Mittelposition. Die Lichtausbreitungsrichtungen (91 - 96) der einzelnen Leuchteinheiten (101 - 106) sind beispielsweise parallel zueinander. Der Hub (75) der Vorschubvorrichtung (61) liegt für jede Leuchteinheit (11 - 16) auf einer Tangente an einen Kreis um das jeweilige Gelenk (101 - 106).

Um die Leuchtweite der Leuchteinheiten (11 - 16) zu erhöhen, werden diese beispielsweise von der Mittelposition in die in der Figur 5 dargestellte Position geschwenkt. Hierzu wird die Antriebseinheit (67) der zweiten Vorschubvorrichtung (61) betätigt. Der Antriebsmotor (68) schiebt die Stange (71) aus der Darstellung der Figur 3 nach links. Hierbei werden die Koppelglieder (72) entgegen dem Uhrzeigersinn geschwenkt und drücken den Rahmen (43) nach unten. Gegebenenfalls werden die flexiblen Elemente und die elastisch verformbaren Elemente (51, 83) verformt und/oder ein Winkel- oder Längenversatz mittels des Spiels in den Gelenken (72, 73; 74) ausgeglichen. Beim Verfahren der zweiten Vorschubvorrichtung (61) wird die erste Vorschubvorrichtung (41) entlang des Hubs (75) geführt. Die Schwenkhebel (21 - 26) werden mitgenommen und schwenken die Leuchteinheiten (11 - 16) im Uhrzeigersinn um die Gelenke (101 - 106), vgl. die Figuren 4 und 5. Der Schwenkwinkel der Leuchteinheiten (11 - 16) beträgt hier beispielsweise 2 Grad. Die Lichtausbreitungsrichtungen (91 - 96) der einzelnen Leuchteinheiten (11 - 16) sind auch im geschwenkten Zustand parallel zueinander.

Um die Leuchtweite der Leuchteinheiten (11 - 16) wieder in die Ausgangsposition zu verstellen oder um die Leuchtweite zu verringern, wird die Vorschubvorrichtung (61) in die Gegenrichtung verfahren.

Die beiden Vorschubvorrichtungen (41, 61) können jeweils eine Weg- und/oder Winkelmessvorrichtung umfassen. Diese können in den Antriebseinheiten (47, 67) integriert sein, am Lichtmodul (11 - 16) befestigt sein, etc. Gegebenenfalls können die Vorschubvorrichtungen (41, 61) auch Verriegelungen umfassen, die z.B. den Rahmen (41) in einer Betriebsposition fixieren.

Die Vorschubvorrichtung (61) kann die erste Vorschubvorrichtung (41) auf einer gekrümmten Bahn führen. Die flexiblen Elemente und die elastisch verformbaren Elemente werden dann z.B. nur geringfügig verformt.

Es ist auch denkbar, einen Antriebsmotor für beide Vorschubvorrichtungen (41, 61) einzusetzen. Dieser kann dann beispielsweise mittels zweier Kupplungen alternativ die erste (41) oder die zweite Vorschubvorrichtung (61) betätigen.

In dem beschriebenen Ausführungsbeispiel sind die Hübe (55, 75) zumindest annähernd normal zueinander orientiert. Die Orientierungen der beiden Strecken können aber auch einen gedachten Winkel einschließen, der ungleich 90 Grad ist. Die Orientierungen der Hübe (55, 75) der beiden Vorschubvorrichtungen (41, 61) sind jedoch nicht identisch. Die Vorschubvorrichtungen (41, 61) wirken auch nicht in einander entgegengesetzte Richtungen. Die Orientierungen der Hübe (55, 75) können somit einen Winkel einschließen, der ungleich einem ganzzahligem Vielfachen von Pi ist.

Die Figuren 6 - 10 zeigen eine Scheinwerferverstellvorrichtung (10), bei der die Leuchteinheiten (11 - 16) in der Fahrtrichtung (5) zueinander versetzt sind. Die Gelenke (101 - 106) sind in diesem Ausführungsbeispiel in einer gemeinsamen z.B. horizontalen Ebene angeordnet. Die in Fahrtrichtung (5) außen rechts liegende Leuchteinheit (16) und die zweite Leuchteinheit (12) von links haben die gleiche Lage wie die entsprechenden Leuchteinheiten (12, 16), die in der Figur 1 dargestellt sind. Die dritte Leuchteinheit (14) von rechts ragt hier am weitesten in die Fahrtrichtung (5). Der Abstand ihrer Gelenke (104, 34) ist beispielsweise um 50 % größer als der Abstand der Gelenke (106, 36) der außenliegenden Leuchteinheit (16).

Die Schwenkhebel (21 - 26) sind zweiteilig aufgebaut. Sie umfassen eine Stange (37), die in einer Hülse (38) verschiebbar geführt ist. Beispielsweise hat die Stange (37) einen quadratischen Außenquerschnitt und die Hülse (38) einen quadratischen Innenquerschnitt. Die beiden Teile (37, 38) bilden somit ein Schubgelenk und können nicht gegeneinander verdreht werden. Die Schwenkhebel (21 - 26) sind in diesem Ausführungsbeispiel unabgekröpft gestaltet.

Der Rahmen (43) und die Antriebseinheit (47) der ersten Vorschubvorrichtung (41) sind beispielsweise so aufgebaut wie im Zusammenhang mit den Figuren 1 bis 5 beschrieben. Die Antriebseinheit (47) und der Führungszapfen (45) lagern die Vorschubvorrichtung (41) in einem äußeren Rahmen (63). Der Führungszapfen (45) ist beispielsweise im äußeren Rahmen (63) in einem Gleitlager (53) gelagert.

Der äußere Rahmen (63) hängt mit zwei Haken (64) in Langlöchern (73) von Koppelgliedern (72), die Teil der Antriebseinheit (67) der Vorschubvorrichtung (61) sind. Die Antriebseinheit (67) umfasst einen Antriebsmotor (68). Letzterer hat beispielsweise eine durchgehende Spindel (71), die mit den Koppelgliedern (72) gelenkig verbunden ist. Der Antriebsmotor (68) sitzt in diesem Ausführungsbeispiel auf einer elastisch verformbaren Platte (85), die am Scheinwerfergehäuse (80) befestigt ist. Die Koppelglieder (72) sind im Scheinwerfergehäuse (80) gelenkig gelagert.

Bei einer Geradeausfahrt, vgl. Figur 6, sind die Leuchteinheiten (11 - 16) parallel zueinander ausgerichtet. Auch die Lichtabstrahlrichtungen (91 - 96) sind parallel zueinander.

Fährt das Fahrzeug z.B. in eine Linkskurve, wird, wie im Zusammenhang mit dem ersten Ausführungsbeispiel beschrieben, der Rahmen (43) mittels der Antriebseinheit (47) nach rechts verschoben. Die Leuchteinheiten (11 - 16) werden entgegen dem Uhrzeigersinn geschwenkt, vgl. Figur 7. Hierbei werden gegebenenfalls die Längen der Schwenkhebel (21 - 26) verändert. Der Schwenkwinkel der einzelnen Leuchteinheit (11 - 16) ist hierbei abhängig vom Abstand der Gelenke (101 - 106; 31 - 36) des jeweiligen Schwenkhebels (21 - 26). Bei einem großen Abstand der Gelenke (104, 34) bewirkt der Hub (55) der Vorschubvorrichtung (41) einen kleinen Schwenkwinkel der Leuchteinheit (14), der gleiche Hub (55) verursacht jedoch einen großen Schwenkwinkel der Leuchteinheiten (12, 16), bei denen der Abstand der Gelenke (102, 32; 106, 36) gering ist.

Die Lichtabstrahlrichtungen (91 - 96) der geschwenkten Leuchteinheiten (11 - 16) sind beispielsweise divergent zueinander. So kann z.B. in einer Kurve ein größerer Bereich der Fahrbahn ausgeleuchtet werden als bei einer Geradeausfahrt.

Bei einer Geradeausfahrt werden die Leuchteinheiten (11 - 16) wieder in die Mittelstellung zurückgestellt. Fährt das Fahrzeug in eine Rechtskurve, werden die Leuchteinheiten (11 - 16) in die entgegengesetzte Richtung geschwenkt.

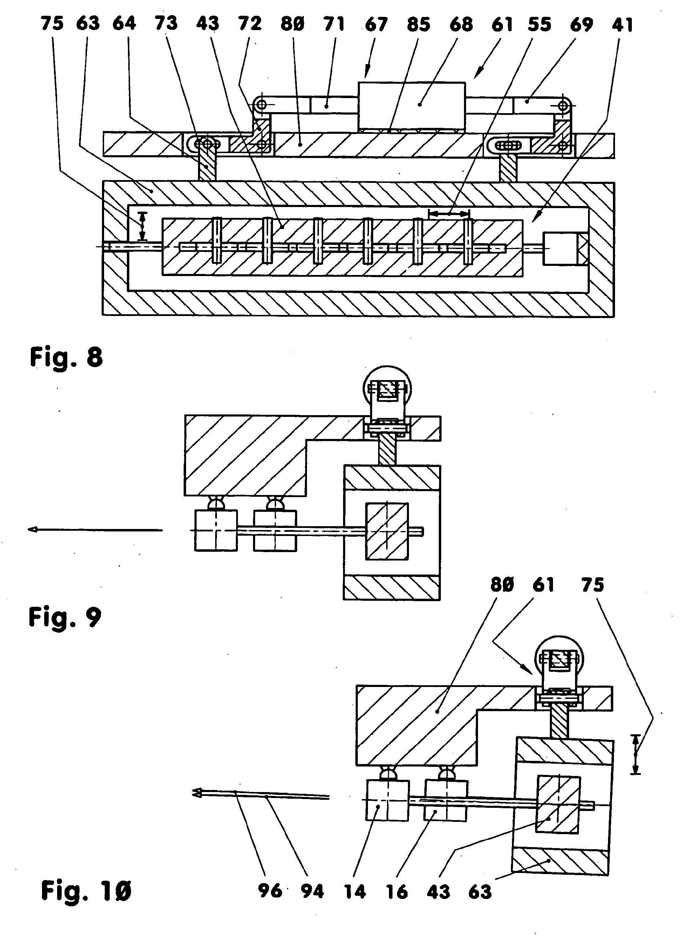

In der Seitenansicht, vgl. Figur 9, sind bei der Einstellung der Leuchteinheiten (11 - 16) für eine mittlere Leuchtweite die Lichtabstrahlrichtungen (91 - 96) parallel zueinander. Um die Leuchtweite zu erhöhen, wird mittels der zweiten Vorschubvorrichtung (61) die erste Vorschubvorrichtung (41) um die Gelenke (101 - 106) geschwenkt. Hierzu schiebt der Antriebsmotor (68) die Stange (71) beispielsweise nach links, vgl. Figur 8. Die Koppelglieder (72) werden entgegen dem Uhrzeigersinn geschwenkt und führen den äußeren Rahmen (63) entlang des Hubs (75) z.B. nach unten. Damit schwenken die Leuchteinheiten (11 - 16) im Uhrzeigersinn um die Gelenke (101 - 106). Die Leuchtweite wird vergrößert. Die Schwenkhebel (21 - 26) werden hierbei gegebenenfalls verlängert oder verkürzt.

Die Figur 10 zeigt die Leuchteinheiten (11 - 16) in der geschwenkten Stellung. Die Lichtabstrahlrichtungen (91 - 96) sind divergent. Hierbei ist die jeweilige Lichtabstrahlrichtung (91 - 96) umso flacher gegenüber einer horizontalen Ebene ausgebildet, je größer der Abstand der Gelenke (101 - 106; 31 - 36) voneinander ist. So kann beispielsweise bei einem Fahrzeug, dessen Vorderachse stärker belastet ist als die Hinterachse, ein ausreichend großer Bereich vor dem Fahrzeug ausgeleuchtet werden.

Fährt das Fahrzeug mit normaler Belastung, werden die Leuchteinheiten (11 - 16) wieder in die in der Figur 9 dargestellte Mittelposition der Leuchtweitenverstellung zurückgestellt. Bei einem hecklastigen Fahrzeug werden die Leuchteinheiten (11 - 16) entsprechend in die Gegenrichtung verstellt.

Die hier beschriebene Scheinwerferverstellvorrichtung kann Weg- und/oder Winkelmeßsysteme aufweisen, mittels derer die Ist-Position der Vorschubeinrichtungen (41, 61) überwacht wird. Die Antriebsmotoren können dann z.B. ohne Wegerfassung ausgeführt sein. Die Vorschubvorrichtungen (41, 61) können auch Verriegelungen umfassen.

Die in den Ausführungsbeispielen eingesetzten Antriebsmotoren (48, 68) sind beispielsweise Linear-Schrittmotoren, deren erforderliche Verfahrstellung z.B. aufgrund einer Ist-Datenermittlung des Fahrzeugzustands, wie z.B. Lenkeinschlag, Beladung, Beschleunigung, etc. errechnet wird. Die Einstellwerte für die Antriebsmotoren (48, 68) können auch aufgrund erwarteter Fahrzustände ermittelt werden.

Auch Kombinationen der hier beschriebenen Ausführungsbeispiele sind denkbar.

Die Scheinwerferverstellvorrichtung (10) erlaubt auch bei einem begrenzten Bauraum innerhalb des Scheinwerfers ein Verstellen mehrerer Leuchteinheiten (11 - 16), ohne dass für jede Leuchteinheit (11 - 16) eigene Vorschubvorrichtungen (41, 61) erforderlich sind. Die Scheinwerferverstellvorrichtung (10) ist somit kompakt und platzsparend ausgebildet.

### Bezugszeichenliste:

- 5: Fahrtrichtung

- 10: Scheinwerferverstellvorrichtung

- 11 - 16: Leuchteinheiten
- 17: Lichtmodul

- 21: Schwenkhebel, außenliegend
- 22 - 25: Schwenkhebel, innenliegend
- 26: Schwenkhebel, außenliegend
- 27: Durchbrüche in (21, 26)
- 28: Langlöcher in (22 - 25)
- 29: Enden von (21 - 26)

- 31 - 36: Gelenke
- 37: Stange
- 38: Hülse

- 41: erste Vorschubvorrichtung
- 42: Schwenkzapfen
- 43: Rahmen
- 44: Stirnseite
- 45: Führungszapfen
- 46: Stirnseite
- 47: Antriebseinheit
- 48: Antriebsmotor, Linear-Schrittmotor
- 49: Übertragungselement, Spindel

- 51: elastisch verformbares Zwischenelement
- 52: Lagerungsbolzen
- 53: Gleitlager
- 55: Hub

- 61: zweite Vorschubvorrichtung

- 63: äußerer Rahmen
- 64: Haken

- 67: Antriebseinheit
- 68: Antriebsmotor, Linear-Schrittmotor
- 69: Getriebe, Koppelgetriebe

- 71: Stange, Spindel
- 72: Koppelglieder
- 73: Langlöcher
- 74: Gelenke
- 75: Hub

- 80: Scheinwerfergehäuse
- 81: Aufnahmerahmen
- 82: Rahmendurchbruch
- 83: elastisch verformbare Hülse
- 84: Durchbruch
- 85: elastisch verformbare Platte

- 91 - 96: Lichtausbreitungsrichtungen

- 101 - 106: Gelenke, Kugelgelenke

## Patentansprüche

1. Scheinwerferverstellvorrichtung mit gruppenweise verstellbaren Leuchteinheiten,
- wobei jede Leuchteinheit (11 - 16) einzeln direkt oder indirekt mittels jeweils eines Gelenks (101 - 106) im Scheinwerfergehäuse (80) gelagert ist und in einer ersten Vorschubvorrichtung (41) schwenkbar gelagert ist,
- wobei die Scheinwerferverstellvorrichtung (10) eine zweite Vorschubvorrichtung (61) umfasst, wobei die zweite Vorschubvorrichtung (61) die erste Vorschubvorrichtung (41) führt,
- wobei die Orientierung des Hubs (55) der ersten Vorschubvorrichtung (41) und die Orientierung des Hubs (75) der zweiten Vorschubvorrichtung (61) einen Winkel einschließen, der ungleich einem ganzzahligen Vielfachen von Pi ist, **dadurch gekennzeichnet, dass** zwei im Scheinwerfergehäuse (80) ortsfest gelagerte Vorschubvorrichtungen (41; 61) auf einen gegenüber dem Scheinwerfergehäuse (80) angeordneten verstellbaren Rahmen (43) einwirken, wodurch sie dessen Position gegenüber dem Scheinwerfergehäuse (80) in zwei Ebenen verändern können.

2. Scheinwerferverstellvorrichtung nach Anspruch 1, **dadurch gekennzeichnet, dass** eine Leuchteinheit (11 - 16) mindestens ein Lichtmodul (17) oder mindestens ein Reflektormodul umfasst.

3. Scheinwerferverstellvorrichtung nach Anspruch 1, **dadurch gekennzeichnet, dass** sie mindestens einen Antriebsmotor (48; 68) umfasst.

4. Scheinwerferverstellvorrichtung nach Anspruch 3, **dadurch gekennzeichnet, dass** der Antriebsmotor (48; 68) ein Linear-Schrittmotor (48; 68) ist.

5. Scheinwerferverstellvorrichtung nach Anspruch 1, **dadurch gekennzeichnet, dass** die Hübe (55, 75) zumindest annähernd normal zueinander orientiert sind.

6. Scheinwerferverstellvorrichtung nach Anspruch 1, **dadurch gekennzeichnet, dass** das Gelenk (101 - 106) drei Schwenkfreiheitsgrade hat.

7. Scheinwerferverstellvorrichtung nach Anspruch 6, **dadurch gekennzeichnet, dass** jede Leuchteinheit (11 - 16) einen Schwenkhebel (21 - 26) umfasst.

8. Scheinwerferverstellvorrichtung nach Anspruch 7, **dadurch gekennzeichnet, dass** die Lagerung (31 - 36) eines jeden Schwenkhebels (21 - 26) in der Vorschubvorrichtung (41) genau einen Schwenkfreiheitsgrad hat.

9. Scheinwerferverstellvorrichtung nach Anspruch 1 oder 8, **dadurch gekennzeichnet, dass** mindestens ein Schwenkhebel (21 - 26) eine Längenverstellung umfasst.

## Claims

1. Headlight adjusting device with light units adjustable by groups,
- where each light unit (11 - 16) is individually mounted directly or indirectly in each case by a joint (101 - 106) in the headlight housing (80) and is swivellably mounted in a first feed device (41),
- where the headlight adjusting device (10) comprises a second feed device (61),
- where the second feed device (61) guides the first feed device (41),
- where the orientation of the movement (55) of the first feed device (41) and the orientation of the movement (75) of the second feed device (61) describe an angle unequal to an integral multiple of Pi,
**characterized in that** two feed devices (41 - 61) mounted stationarily in the headlight housing (80) act on an adjustable frame (43) arranged opposite the headlight housing (80), whereby they can alter its position relative to the headlight housing (80) in two planes.

2. Headlight adjusting device according to Claim 1, **characterized in that** a light unit (11 - 16) comprises at least one light module (17) or at least one reflector module.

3. Headlight adjusting device according to Claim 1, **characterized in that** it comprises at least one drive motor (48; 68).

4. Headlight adjusting device according to Claim 3, **characterized in that** the drive motor (48; 68) is a linear step motor (48; 68).

5. Headlight adjusting device according to Claim 1, **characterized in that** the movements (55, 75) are oriented at least approximately normal relative to one another.

6. Headlight adjusting device according to Claim 1, **characterized in that** the joint (101 - 106) has three degrees of swivel freedom.

7. Headlight adjusting device according to Claim 6, **characterized in that** each light unit (11 - 16) has a swivel lever (21 - 26).

8. Headlight adjusting device according to Claim 7, **characterized in that** the mounting (31 - 36) of each swivel lever (21 - 26) in the feed device (41) has precisely one degree of swivel freedom.

9. Headlight adjusting device according to Claim 1 or Claim 8, **characterized in that** at least one swivel lever (21 - 26) comprises a length adjustment feature.

## Revendications

1. Dispositif de réglage de phares doté d'unités d'éclairage réglables en groupes,
- sachant que chaque unité d'éclairage (11 - 16) est logée individuellement de manière directe ou indirecte au moyen de respectivement une articulation (101 - 106) dans le boîtier de phare (80) et est disposée de manière à pouvoir pivotée dans un premier dispositif de déplacement (41),
- sachant que le dispositif de réglage de phares (10) comprend un deuxième dispositif de déplacement (61),
- sachant que le deuxième dispositif de déplacement (61) dirige le premier dispositif de déplacement (41),
- sachant que l'orientation de la course (55) du premier dispositif de déplacement (41) et l'orientation de la course (75) du deuxième dispositif de déplacement (61) incluent un angle qui n'est pas égal à un multiple entier de Pi,
**caractérisé en ce que** deux dispositifs de déplacement (41 ; 61) logés de manière fixe dans le boîtier de phare (80) agissent sur un cadre (43) logé de manière à pouvoir être déplacé par rapport au boîtier de phare (80), dont ils peuvent modifier la position en deux niveaux par rapport au boîtier de phare (80).

2. Dispositif de réglage de phares selon la revendication 1, **caractérisé en ce qu'**une unité d'éclairage (11 - 16) comprend au moins un module lumineux (17) ou au moins un module réfléchissant.

3. Dispositif de réglage de phares selon la revendication 1, **caractérisé en ce qu'**il comprend au moins un moteur d'entraînement (48 ; 68).

4. Dispositif de réglage de phares selon la revendication 3, **caractérisé en ce que** le moteur d'entraînement (48 ; 68) est un moteur linéaire pas à pas (48 ; 68).

5. Dispositif de réglage de phares selon la revendication 1, **caractérisé en ce que** les courses (55, 75) sont orientées de manière au moins approximativement normale les unes par rapport aux autres.

6. Dispositif de réglage de phares selon la revendication 1, **caractérisé en ce que** l'articulation (101 - 106) présente trois degrés de liberté de pivotement.

7. Dispositif de réglage de phares selon la revendication 6, **caractérisé en ce que** chaque unité d'éclairage (11 - 36) comprend un levier pivotant (21 - 26).

8. Dispositif de réglage de phares selon la revendication 7, **caractérisé en ce que** le logement (31 - 36) de chaque levier pivotant (21 - 26) dans le dispositif de déplacement (41) présente exactement un degré de liberté de pivotement.

9. Dispositif de réglage de phares selon la revendication 1 ou 8, **caractérisé en ce qu'**au moins un levier pivotant (21 - 26) comprend un réglage en longueur.
